# EUROPÄISCHE PATENTSCHRIFT

(11) **EP 1 717 456 B1**
(45) Veröffentlichungstag und Bekanntmachung des Hinweises auf die Patenterteilung: **09.09.2009**
(21) Anmeldenummer: 06014828.5
(22) Anmeldetag: 20.05.2005
(51) Int. Cl.: F16B 12/00

(54) **Steckverbindung mit Stabilisator**
Plug-in connection with stabilizer
Raccord enfichable avec stabilisateur

(30) Priorität: 27.05.2004 AT 9182004
(43) Veröffentlichungstag der Anmeldung: 02.11.2006
(62) Teilanmeldung aus: 05450091.3
(73) Patentinhaber: Vinzenz Harrer, 8162 Neudorf bei Passail (AT)
(72) Erfinder: Vinzenz Harrer, 8162 Neudorf bei Passail (AT)
(74) Vertreter: Gibler, Ferdinand

(56) Entgegenhaltungen:
- AT-B- 411 094
- DE-B- 10 326 196
- US-A- 4 900 090

## Beschreibung

Die Erfindung betrifft eine Steckverbindung in Form eines Nut-Feder-Systems für lösbare Verbindungen, wobei die Nut wenigstens teilweise hinterschnitten und an zumindest einer ersten Stirnseite randoffen ist und die Feder gegengleich zur Nut ausgebildet ist, wobei der zur Längsrichtung der Nut im wesentlichen senkrechte Nutquerschnitt in einem an die erste Stirnseite anschließenden ersten Bereich von der ersten Stirnseite weg in Längsrichtung sich keilförmig verjüngend und in einem anschließenden zweiten Bereich in Längsrichtung konstant bleibend ausgebildet ist, wobei der Nutquerschnitt zumindest im zweiten Bereich hinterschnitten ist, wobei die Nut in einen im wesentlichen flachen, insbesondere quaderförmigen, Block ausgebildet ist, wobei der Block Durchtritte aufweist, wodurch er mittels Schrauben, Nieten od. dgl. mit einem Körper verbindbar ist, wobei die Rückseite dem Körper angrenzend angeordnet ist, wobei die Feder des Nut-Feder-Systems als Fedcr-Block ausgebildet ist, wobei der Feder-Block weitere Durchtritte aufweist, wodurch er mittels Schrauben od. dgl. mit einem Körper verbindbar ist, und wobei eine weitere Rückseite an dem Körper angrenzend angeordnet ist.

Solche Steckverbindungen sind zur raschen und bequemen Verbindung von Metall-, Beton-, Kunststoff- und/oder Holzteilen geeignet. Derartige Steckverbindungen sind beispielsweise aus der AT 411 094 B bekannt.

Die US 4 900 090 A wiederum beschreibt eine Gartenliege aus Kunststoff, welche aus Einzelteilen mittels Schnappverbindungen zusammengesetzt ist.

Die DE 103 26 196 B offenbart ein zum Verbinden von Betonwänden ausgebildetes Verbindungselement.

Nachteilig an diesen Steckverbindungen ist, dass insbesondere bei solchen Steckverbindungen kleineren Durchmessers ein Spiel zur unerwünschten Verdrehung miteinander verbundener Teile verbleibt. Ein weiterer Nachteil besteht darin, dass solche Steckverbindungen nur bei solchen Anwendungen stabil.sind, wo ein Einrasten im Wesentlichen gegen die Schwerkraft erfolgt. Bei einer horizontalen Nut-Feder-Ausrichtung, beispielsweise zur Montage von Trennwänden zwischen senkrechten Stehern, können die Teile leicht wieder auseinander gleiten. Daher ergibt sich bei diesen bekannten Steckverbindungen öfters die Situation, dass keine hinreichend stabile Verbindung entsteht.

Aufgabe der Erfindung ist es daher, eine Steckverbindung anzugeben, bei der auch bei relativ kleinen Abmessungen von Nut und Feder eine Verbindung ohne seitlichem bzw. drehendem Spiel erzielt wird.

Weitere Aufgabe der Erfindung ist es, eine Steckverbindung bereitzustellen bei der die zu verbindenden Teile im verbundnen Zustand sicher verbunden gehalten werden und ein unerwünschtes Trennen der Teile zuverlässig vermieden wird.

Erfindungsgemäß wird dies dadurch erreicht, dass zur zusätzlichen Stabilisierung bzw.

Sicherung der Steckverbindung wenigstens ein Stabilisator vorgesehen ist, und dass der Stabilisator als Feststellelement zur Fixierung von Nut und Feder, als ein Anschlagelement am Block zum Anschlag des Feder-Blocks, wobei sich dieses Anschlagelement über die gesamte Breite des Blocks erstreckt, und/oder als wenigstens eine parallel zur ersten Steckverbindung angeordnete weitere Steckverbindung, die mit der ersten Steckverbindung fest verbunden ist, ausgebildet ist.

Dadurch ergibt sich der Vorteil, dass die Verbindung zusätzlich stabilisiert wird, ein unerwünschtes Spiel und eine unerwünschte Trennung vermieden wird, und eine verdrehungssichere Verbindung gewährleistet wird.

Auf diese Weise kann die Nut in einfacher Weise mit einem Körper verbunden werden, ohne dass sie in diesen eingefräst od. dgl. werden muss, wodurch für die Ausbildbarkeit der Nut die Wandstärke des Körpers unerheblich ist.

Mittels des Feder-Blocks kann die Feder auf einfache Weise mit einem Körper verbunden werden, ohne dass die Ausbildbarkeit der Feder bereits bei der Konstruktion des Körpers berücksichtigt werden muss.

Wenn der Stabilisator als Feststellelement zur Fixierung von Nut und Feder ausgebildet ist, kann eine Verbindung unabhängig von der vertikalen Ausrichtung der Nut bzw. der Feder fixiert werden und ein unerwünschtes Auseinandergleiten vermieden werden.

Wenn das Feststellelement als lösbares Feststellelement, insbesondere als eine Schraubverbindung, ausgebildet ist, kann mit besonders einfachen Mitteln auch ein schnelles Lösen von Verbindungen erreicht werden, wie dies bei raschen Umbauten, beispielsweise im Bühnenbereich oder Gerüstbau, erforderlich ist.

Der Stabilisator kann als ein Anschlagelement am Block zum Anschlag des Feder-Blocks ausgebildet sein, wobei sich dieses Anschlagelement über die gesamte Breite des Blocks erstreckt.

Ein Anschlagelement wirkt zuverlässig einer unerwünschten Verdrehung entgegen und ist einfach herstellbar. Bei seiner Ausbildung über die gesamte Breite des Blocks ist die Wirkung gegen unerwünschte Verdrehung aufgrund längerer Drehradien noch besser.

Insbesondere kann vorgesehen sein, dass das Anschlagelement in Form einer Anschlagleiste am Ende gegenüber der ersten Stirnseite des Blocks angeordnet ist.

Diese Ausgestaltung ist besonders einfach und kostengünstig realisierbar.

Schließlich kann vorgesehen sein, dass der Stabilisator als wenigstens eine parallel zur ersten Steckverbindung angeordnete weitere Steckverbindung, die mit der ersten Steckverbindung fest, vorzugsweise einstückig, verbunden ist, ausgebildet ist.

Die Erfindung wird unter Bezugnahme auf die beigeschlossenen Zeichnungen, in welchen Ausführungsformen dargestellt sind, näher beschrieben. Dabei zeigt:
Fig. 1 die Draufsicht auf einen Block mit der Nut einer erfindungsgemäßen Steckverbindung;
Fig. 2 die Schnittansicht des Blocks von Fig. 1 längs zur Nut;
Fig. 3 die Schnittansicht des Blocks von Fig. 1 quer zur Nut;
Fig. 4 den Block von Fig. 1 im Schrägriss.
Fig. 5 die Draufsicht auf einen Federblock einer erfindungsgemäßen Steckverbindung;
Fig. 6 die Schnittansicht des Federblocks von Fig. 5 längs zur Nut;
Fig. 7 die Schnittansicht des Federblocks von Fig. 5 quer zur Nut;
Fig. 8 den Federblock von Fig. 5 im Schrägriss.
Fig. 9 die Draufsicht auf eine weitere Ausführungsform eines Blocks einer erfindungsgemäßen Steckverbindung mit einer Nut und einer weiteren Nut;
Fig. 10 die Schnittansicht des Blocks von Fig. 9 längs zur Nut;
Fig. 11 die Schnittansicht des Blocks von Fig. 9 quer zur Nut;
Fig. 12 den Block von Fig. 9 im Schrägriss.
Fig. 13 die Draufsicht auf eine weitere Ausführungsform eines Federblocks einer erfindungsgemäßen Steckverbindung mit einer Feder und einer weiteren Feder;
Fig. 14 die Schnittansicht des Federblocks von Fig. 13 längs zur Nut;
Fig. 15 die Schnittansicht des Federblocks von Fig. 13 quer zur Nut;
Fig. 16 den Federblock von Fig.13 im Schrägriss.

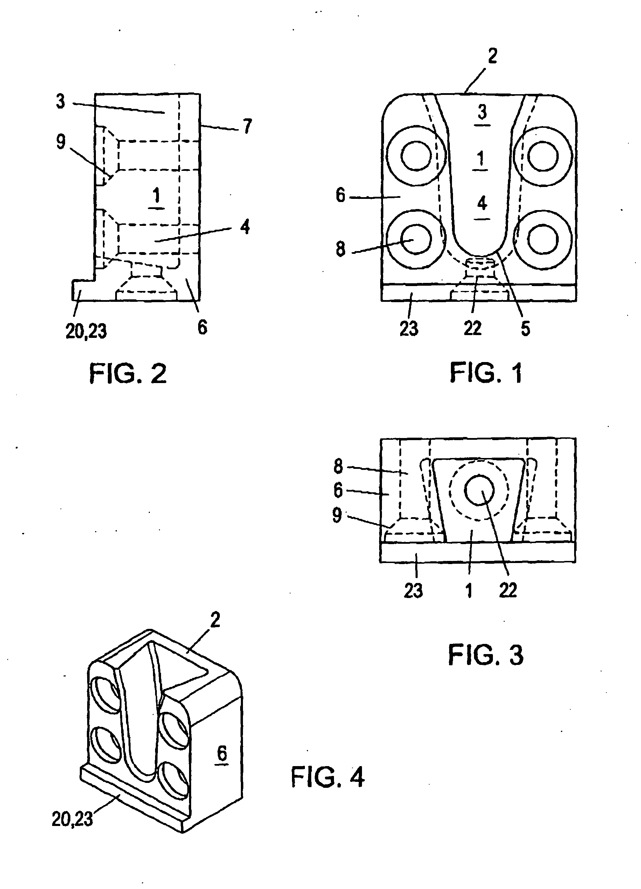

In den Fig. 1 bis 4 ist ein Block 6 in Draufsicht, in einer Schnittansicht längs bzw. zur Nut 1 quer und im Schrägriss dargestellt. Der Block 6 weist eine Nut 1 einer erfindungsgemäßen Steckverbindung für lösbare Verbindungen in der Art eines Nut-Feder-Systems auf. Die Nut 1 ist hinterschnitten und an einer ersten Stirnseite 2 randoffen, wobei der zur Längsrichtung der Nut 1 im wesentlichen senkrechte Nutquerschnitt in einem an die erste Stirnseite 2 anschließenden ersten Bereich 3 von der ersten Stirnseite 2 weg in Längsrichtung sich keilförmig verjüngend und in einem anschließenden zweiten Bereich 4 in Längsrichtung konstant bleibend ausgebildet ist, wobei der Nutquerschnitt zumindest im zweiten Bereich 4 hinterschnitten ist.

Aus Fig. 3 ist ersichtlich, dass der Nutquerschnitt im zweiten Bereich 4 schwalbenschwanzförmig ausgebildet ist, und aus Fig. 1, dass die Nut 1 an ihrer der ersten Stirnseite 2 gegenüberliegenden zweiten Stirnseite 5 geschlossen und abgerundet ausgebildet ist. Bei anderen Ausführungen einer erfindungsgemäßen Steckverbindung kann die zweite Stirnseite 4 auch offen oder geschlossen und als Polygonzug oder oval ausgebildet sein. Neben der schwalbenschwanzförmigen Ausgestaltung der Nut 1 sind bei anderen Ausführungsformen auch andere hinterschnittene Nutformen vorgesehen.

Bei der gezeigten Ausführungsform ist gemäß Fig. 1 die Längserstreckung des zweiten Bereichs 4 größer als die des ersten Bereichs 3, wobei sie sogar mehr als doppelt so groß ist. Der erste Bereich 3 bietet den Vorteil, dass auch eine nicht exakt positionierte Feder 11 leicht in die Nut 1 eingebracht werden kann, da der konische Bereich eine seitliche Führung darstellt, wodurch die Feder 1 ausgerichtet wird. Die schwalbenschwanzförmige Nut 1 stellt ebenfalls ein Führungssystem dar, welches den richtigen Abstand zwischen Nut 1 und Feder 11 bewirkt.

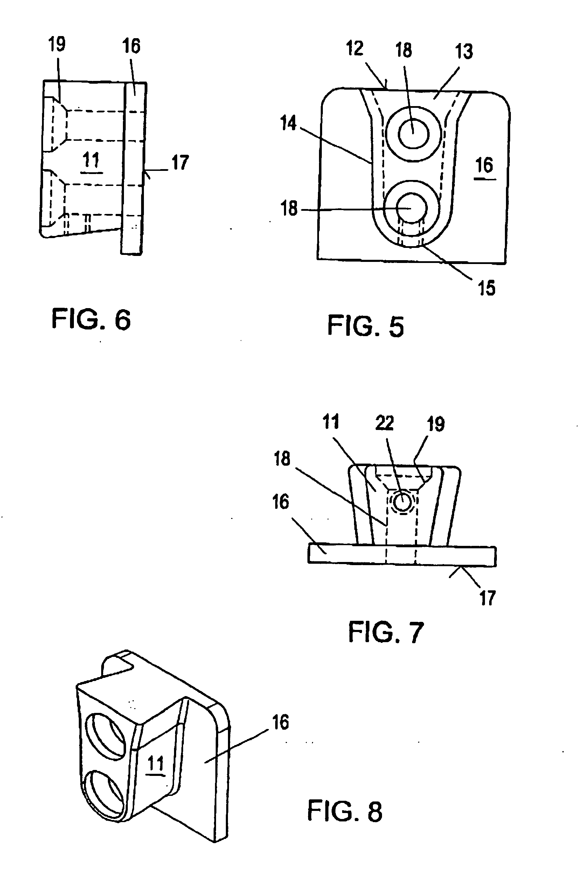

Die Nut 1 kann entweder direkt in einem Körper, oder, wie in der dargestellten Ausführungsform, in dem flachen, insbesondere quaderförmigen, Block 6 ausgebildet sein, wobei der Block 6 mit dem Körper verbindbar ist, wobei eine dem Körper 6 angepasste Rückseite 7 des Blocks 6 am Körper anliegt. Für die Verbindung weist der Block 6 Durchtritte 8 auf, sodass er mittels Schrauben, Nieten od. dgl. mit dem Körper verbindbar ist. Die Feder der erfindungsgemäßen Steckverbindung ist gegengleich zur Nut 1 ausgebildet und kann entweder direkt an einem Körper angeformt oder als Feder-Block 11, der mit dem Körper verbindbar ist, ausgebildet sein. In den Fig. 5 bis 8 ist ein Federblock 11 in Draufsicht, in einer Schnittansicht längs bzw. quer zur Feder 11 und im Schrägriss dargestellt.

Die Feder 11 weist eine weitere erste Stirnseite 12, einen weiteren ersten Bereich 13 mit einem im wesentlichen zur Längsrichtung der Feder 11 senkrechten, sich in Längsrichtung der Feder 11 von der weiteren ersten Stirnseite 12 weg verjüngenden Federquerschnitt, einen weiteren zweiten Bereich 14 mit konstant bleibenden Federquerschnitt und einer der weiteren ersten Stirnseite 12 gegenüberliegenden weiteren zweiten Stirnseite 15, die abgerundet ausgebildet ist, auf.

An den Feder-Block 11 ist einstückig eine Platte 16 angeformt, welche eine weitere Rückseite 17 aufweist, die bei der Verbindung mit dem Körper an diesem anliegt. Für die Verbindung mit dem Körper mittels Schrauben od. dgl. weist der Feder-Block 11 weitere Durchtritte 18 auf.

Auf der der Rückseite 7 gegenüberliegenden Seite weisen die Durchtritte 8 und auf der der weiteren Rückseite 17 gegenüberliegenden Seite weisen die weiteren Durchtritte 18 Erweiterungen 9, 19 auf, die Schraubenköpfe aufnehmen können.

Nun ist zur zusätzlichen Stabilisierung bzw. Sicherung der Steckverbindung erfindungsgemäß wenigstens ein Stabilisator 20 vorgesehen. Ein solcher Stabilisator 20 bewirkt eine sicherere Verbindung der Teile der Steckverbindung, verhindert ein erhebliches Bewegungsspiel, insbesondere Verdrehung bzw. verhindert ein unbeabsichtigtes Auseinanderrutschen von Nut 1 und Feder 11. Der Stabilisator 20 kann beispielsweise als Feststellelement 22 zur Fixierung von Nut 1 und Feder 11 ausgebildet sein. So kann die Verbindung von Nut 1 und Feder 11 zuverlässig fixiert werden. Hierfür eignen sich beispielsweise Splinte oder Nieten. Damit die erfindungsgemäße Steckverbindung auch für rasche Umbauten geeignet ist, ist es vorteilhaft, wenn das Feststellelement 22 lösbar ausgebildet ist. Im einfachsten Fall besteht das Feststellelement 22 aus einer lösbaren Schraubverbindung. Das Feststellelement 22 ist vorteilhafter weise im Bereich der zweiten Stirnseiten 5, 15 angeordnet. Bei dieser Anordnung ist das Feststellelement auch dann leicht zugänglich, wenn die Steckverbindungen in Fräsungen von zu verbindenden Holzteilen angeordnet sind.

Eine weitere Möglichkeit zur Ausbildung eines Stabilisators 20 ist ein Anschlagelement 23 am Block 6 zum Anschlag des Feder-Blocks 11, wobei sich dieses Anschlagelement 23 vorzugsweise über die gesamte Breite des Blocks 6 erstreckt. Der Vorteil eines Anschlagelements 23 besteht darin, dass ein Anschlag ohne Betätigung eines Feststellelements 22 erzielt werden kann und daher eine rasche Steckverbindung ermöglicht wird. Die zusätzliche Fixierung wird also ohne zusätzliche Manipulation erreicht. Bei einer Erstreckung des Anschlagelements 23 über die gesamte Breite des Blocks 6 ist die Sicherung der Steckverbindung, insbesondere gegenüber Verdrehung, besonders wirkungsvoll. Besonders einfach ist das Anschlagelement 23 in Form einer Anschlagleiste am Ende gegenüber der ersten Stirnseite 2 des Blocks 6 zu realisieren. Zur zusätzlichen Sicherung könnte die Anschlagleiste auch gewellt oder gezackt sein und die Platte 16 am gegengleichen Ende gegengleich ausgebildet sein.

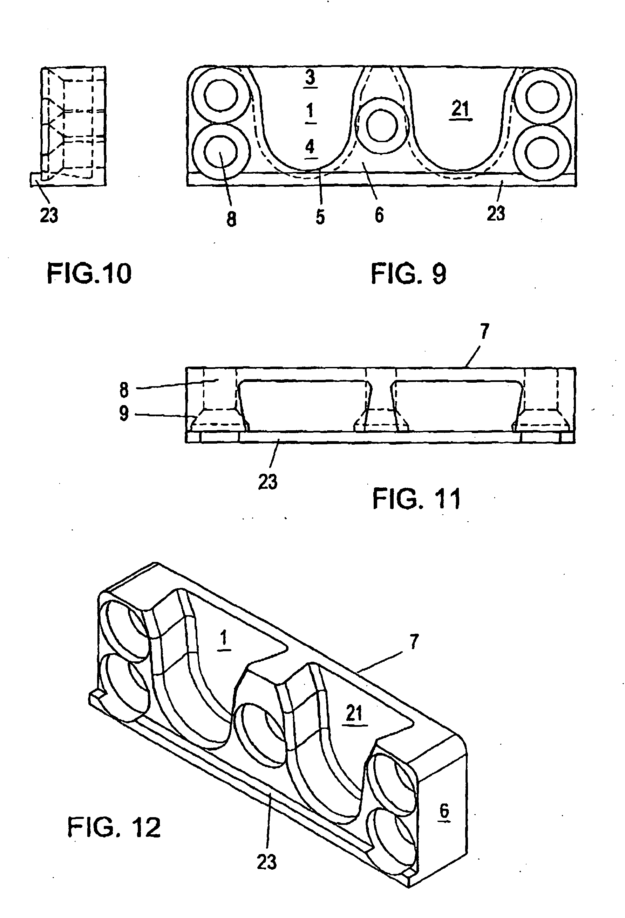

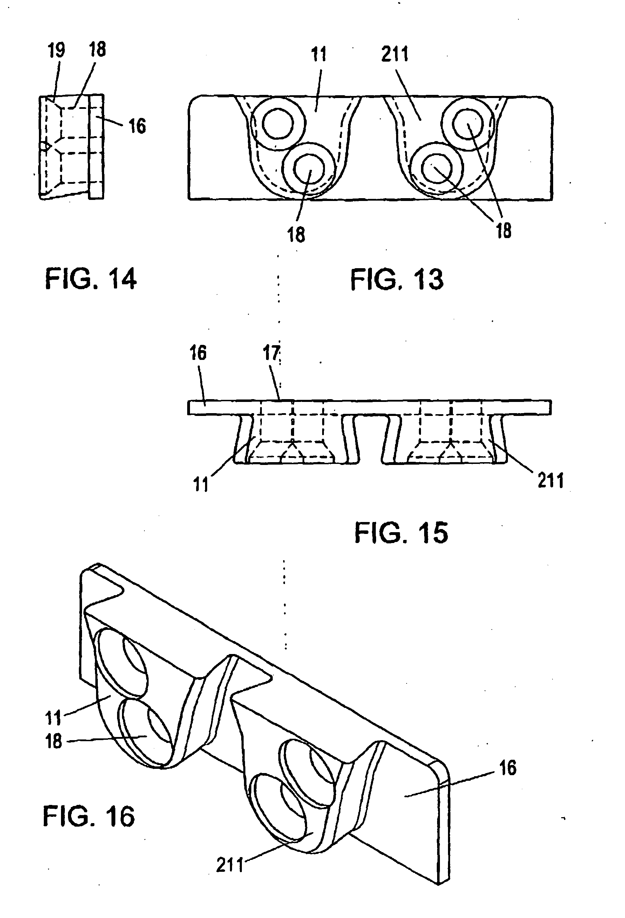

Eine weitere Möglichkeit zur Ausbildung eines Stabilisators 20 ist wenigstens eine weitere parallel zur ersten Steckverbindung angeordnete Steckverbindung 21, 211, die mit der ersten Steckverbindung fest, vorzugsweise einstückig, verbunden ist, ausgebildet ist. Demgemäß umfasst die Steckverbindung neben der Nut 1 und der Feder 11 auch wenigstens eine weitere Nut 21 und eine weitere Feder 211. Eine entsprechende Ausführungsform ist in den Figuren 9 bis 16 dargestellt. Ebenso könnten auch mehr als zwei Steckverbindungen einstückig miteinander verbunden angeordnet sein.

Die unterschiedlichen Ausführungsformen von Stabilisatoren 20, wie beispielsweise Feststellelement 22, Anschlagelement, 23 oder weitere Steckverbindung 21, 211, können auch beliebig miteinander kombiniert werden.

## Patentansprüche

1. Steckverbindung in Form eines Nut-Feder-Systems für lösbare Verbindungen, wobei die Nut wenigstens teilweise hinterschnitten und an zumindest einer ersten Stirnseite randoffen ist und die Feder gegengleich zur Nut ausgebildet ist, wobei der zur Längsrichtung der Nut (1) im wesentlichen senkrechte Nutquerschnitt in einem an die erste Stirnseite (2) anschließenden ersten Bereich (3) von der ersten Stirnseite (2) weg in Längsrichtung sich keilförmig verjüngend und in einem anschließenden zweiten Bereich (4) in Längsrichtung konstant bleibend ausgebildet ist, wobei der Nutquerschnitt zumindest im zweiten Bereich (4) hinterschnitten ist, wobei die Nut (1) in einen im wesentlichen flachen, insbesondere quaderförmigen, Block (6) ausgebildet ist, wobei der Block (6) Durchtritte (8) aufweist, wodurch er mittels Schrauben, Nieten od. dgl. mit einem Körper verbindbar ist, wobei die Rückseite (7) dem Körper angrenzend angeordnet ist, wobei die Feder des Nut-Feder-Systems als Feder-Block (11) ausgebildet ist, wobei der Feder-Block (11) weitere Durchtritte (18) aufweist, wodurch er mittels Schrauben od. dgl. mit einem Körper verbindbar ist, und wobei eine weitere Rückseite (17) an dem Körper angrenzend angeordnet ist, **dadurch gekennzeichnet, dass** zur zusätzliche Stabilisierung bzw. Sicherung der Steckverbindung wenigstens ein Stabilisator (20) vorgesehen ist, und dass der Stabilisator (20) als Feststellelement (22) zur Fixierung von Nut (1) und Feder, als ein Anschlagelement (23) am Block (6) zum Anschlag des Feder-Blocks (11), wobei sich dieses Anschlagelement (23) über die gesamte Breite des Blocks (6) erstreckt, und/oder als wenigstens eine parallel zur ersten Steckverbindung angeordnete weitere Steckverbindung (21, 211), die mit der ersten Steckverbindung fest verbunden ist, ausgebildet ist.

2. Steckverbindung nach Anspruch 1, **dadurch gekennzeichnet, dass** das Feststellelement (22) als lösbares Feststellelement ausgebildet ist.

3. Steckverbindung nach Anspruch 2, **dadurch gekennzeichnet, dass** das lösbare Feststellelement als eine Schraubverbindung ausgebildet ist.

4. Steckverbindung nach Anspruch 1, 2 oder 3, **dadurch gekennzeichnet, dass** das Anschlagelement (23) in Form einer Anschlagleiste am Ende gegenüber der ersten Stirnseite (2) des Blocks angeordnet ist.

5. Steckverbindung nach einem der Ansprüche 1 bis 4, **dadurch gekennzeichnet, dass** der Block (6) eine ebene Rückseite (7) aufweist.

6. Steckverbindung nach einem der Ansprüche 1 bis 5, **dadurch gekennzeichnet, dass** die weitere Steckverbindung (21, 211) einstückig mit der Steckverbindung verbunden ist.

## Claims

1. A plug-in connection in the form of a tongue-and-groove system for detachable connections, with the groove being partly undercut and comprising edge openings on a first face side and the spring being arranged diametrically opposed to the groove, with the groove cross section which is substantially perpendicular to the longitudinal direction of the groove (1) being arranged to taper in a wedge-like manner in a longitudinal direction away from the first face side (2) in a first region (3) adjacent to the first face side (2) and being arranged to remain constant in the longitudinal direction in an adjacent second region (4), with the cross section of the groove being undercut at least on a second region (4), with the groove (1) being arranged in a substantially flat, especially cuboid, block (6), with the block (6) having passages (8) through which it can be connected with a body by means of screws, rivets or the like, with the rear side (7) being arranged to be adjacent to the body, with the spring of the tongue-and-groove system being arranged as a spring block (11), with the spring block (11) having further passages (18) through which it can be connected with the body by means of screws or the like, and with a further rear side (17) being arranged to be adjacent to the body, **characterized in that** at least one stabilizer (20) is provided for additional stabilization or securing the plug-in connection, and that the stabilizer (20) is arranged as a fixing element (22) for fixing the groove (1) and spring, as a stop element (23) on the block (6) for stopping the spring block (11), with said stop element (23) extending over the entire width of the block (6), and/or as at least one further plug-in connection (21, 211) which is arranged parallel to the first plug-in connection and which is fixedly connected with the first plug-in connection.

2. A plug-in connection according to claim 1, **characterized in that** the fixing element (22) is arranged as a detachable fixing element.

3. A plug-in connection according to claim 2, **characterized in that** the detachable fixing element is arranged as a screwed joint.

4. A plug-in connection according to claim 1, 2 or 3, **characterized in that** the stop element (23) is arranged in the form of a stop rail at the end opposite of the first face side (2) of the block.

5. A plug-in connection according to one of the claims 1 to 4, **characterized in that** the block (6) has a planar rear side (7).

6. A plug-in connection according to one of the claims 1 to 5, **characterized in that** the further plug-in connection (21, 211) is integrally connected with the plug-in connection.

## Revendications

1. Connexion enfichée prenant la forme d'un système à rainure et ressort pour des liaisons pouvant être défaites, dans laquelle la rainure présente une contre-dépouille au moins partielle et est ouverte sur le bord au moins sur une première face d'extrémité et le ressort est conformé de façon symétrique de la rainure, la section de la rainure sensiblement perpendiculaire au sens longitudinal de la rainure (1) se resserrant en forme de coin dans une première zone (3) contiguë à la première face d'extrémité (2) en s'éloignant de la première face d'extrémité (2) dans le sens longitudinal et ayant une forme constante dans le sens longitudinal dans une deuxième zone (4) qui lui fait suite, la section de la rainure présentant une contre-dépouille au moins dans la deuxième zone (4), la rainure (1) étant formée dans un bloc (6) sensiblement plat et en particulier carré, lequel bloc (6) présente des passages (8) à travers lesquels il peut être assemblé à un corps au moyen de vis, de rivets ou similaires, la face arrière (7) étant disposée contiguë au corps, les ressorts du système de rainure et de ressort étant conformés comme un bloc de ressort (11), lequel bloc de ressort (11) présente d'autres passages (18) à travers lesquels il peut être relié à un corps au moyen de vis ou similaires, et une autre face arrière (17) étant disposée contiguë du corps, **caractérisée en ce qu'**en vue de la stabilisation ou de la fixation supplémentaire de la connexion enfichée, il est prévu au moins un stabilisateur (20) et **en ce que** le stabilisateur (20) est conformé comme un élément d'immobilisation (22) pour la fixation de la rainure (1) et du ressort, comme un élément de butée (23) sur le bloc (6) pour la butée du bloc de ressort (11), lequel élément de butée (23) s'étend sur toute la largeur du bloc (6), et/ou comme au moins une autre connexion enfichée (21, 211) disposée parallèlement à la première connexion enfichée, qui est reliée de façon fixe à la première connexion enfichée.

2. Connexion enfichée selon la revendication 1, **caractérisée en ce que** l'élément d'immobilisation (22) est conformé comme un élément d'immobilisation pouvant être défait.

3. Connexion enfichée selon la revendication 2, **caractérisée en ce que** l'élément d'immobilisation (22) est conformé comme un assemblage vissé.

4. Connexion enfichée selon la revendication 1, 2 ou 3, **caractérisée en ce que** l'élément de butée (23) est disposé sous la forme d'une bande de butée à l'extrémité faisant face à la première face d'extrémité (2) du bloc.

5. Connexion enfichée selon l'une des revendications 1 à 4, **caractérisée en ce que** le bloc (6) présente une face arrière (7) plane.

6. Connexion enfichée selon l'une des revendications 1 à 5, **caractérisée en ce que** l'autre connexion enfichée (21, 211) est reliée d'un seul tenant à la connexion enfichée.
